# EUROPÄISCHE PATENTSCHRIFT

(11) **EP 2 820 553 B1**
(45) Veröffentlichungstag und Bekanntmachung des Hinweises auf die Patenterteilung: **01.08.2018**
(21) Anmeldenummer: 12718062.8
(22) Anmeldetag: 02.04.2012
(51) Int. Cl.: G06F 13/38, G06F 13/14, G06F 13/40

(54) **KOPPLUNGSEINRICHTUNG UND VERFAHREN ZUM DYNAMISCHEN BELEGEN VON USB-ENDPUNKTEN EINER USB-SCHNITTSTELLE SOWIE BÖRSEN-TRADINGSYSTEM-ENDGERÄT MIT KOPPLUNGSEINRICHTUNG**
COUPLING DEVICE AND METHOD FOR DYNAMICALLY ALLOCATING USB ENDPOINTS OF A USB INTERFACE, AND EXCHANGE TRADING SYSTEM TERMINAL WITH COUPLING DEVICE
DISPOSITIF DE COUPLAGE ET PROCÉDÉ D'OCCUPATION DYNAMIQUE DE POINTS DE CONNEXION USB D'UNE INTERFACE USB ET TERMINAL DE SYSTÈMES DE NÉGOCIATIONS BOURSIÈRES ÉQUIPÉ D'UN DISPOSITIF DE COUPLAGE

(30) Priorität: 02.03.2012 EP 12001441; 30.03.2012 WO PCT/EP2012/001441
(43) Veröffentlichungstag der Anmeldung: 07.01.2015
(73) Patentinhaber: Unify GmbH & Co. KG, 80807 München (DE)
(72) Erfinder: ALBERT, Elmar, 83026 Rosenheim (DE); SELMECZI, András, 2016 Leányfalu (HU)
(74) Vertreter: Fritzsche, Thomas
(86) Internationale Anmeldenummer: PCT/EP2012/001460
(87) Internationale Veröffentlichungsnummer: WO 2013/127413

(56) Entgegenhaltungen:
- US-A1- 2006 056 401
- US-A1- 2006 080 491

## Beschreibung

Die vorliegende Erfindung betrifft eine Kopplungseinrichtung und ein Verfahren zum dynamischen Belegen von USB-Endpunkten einer USB-Schnittstelle, auf die durch mindestens zwei Applikationen zugegriffen werden kann, sowie ein Börsen-Tradingsystem-Endgerät, welches eine derartige Kopplungseinrichtung umfasst, welches das vorgenannte Verfahren ausführen kann.

Bei handelsüblichen USB-Geräten besteht immer eine feste Zuordnung von Ein- und Ausgabegeräten zu den jeweiligen USB-Endpunkten, so dass für jede angestrebte Anwendung mehrere USB-Geräte eingesetzt werden müssen. Obwohl in verschiedenen Anwendungs-Szenarien unterschiedliche, aber in der Regel nicht alle Geräte aktiv sein müssen, müssen alle Geräte vorhanden sein, um alle möglichen Szenarien ausführen bzw. bedienen zu können.

Die Umschaltung einzelner Geräte innerhalb eines USB-Multifunktionsgerätes, die durch entsprechende USB-Endpunkte angekoppelt sind, erfordert eine gewisse Zeit. Daher kann eine derartige Umschaltung in der Regel nicht unterbrechungsfrei durchgeführt werden, sondern es müssen zumindest einzelne Geräte zeitweise deaktiviert werden. Außerdem können neu zu verwendende Geräte nicht sofort eingesetzt werden, sondern erst nach einer gewissen Wartezeit.

US 2006/0080491 A1 betrifft eine mobile Einrichtung mit einem USB-Sender/Empfänger, der eine oder mehrere Schnittstellen aufweist, die durch einen oder mehrere Endpunkte gebildet sind, um Informationen über den USB mit einem Host Computer auszutauschen, wobei eine oder mehrere logische Einrichtungen den Austausch von Informationen mit dem Host Computer über den USB Sender/Empfänger durchführen. Ein Controller wählt, wenn eine Funktion von einem oder mehreren logischen Einrichtungen verwendet wird, so viele Schnittstellen aus, wie für den Austausch der Informationen zwischen der logischen Einrichtung und dem Host-Computer durch die eine oder mehrere Schnittstellen in dem USB Sender/Empfänger erforderlich sind.

Gemäß US 2006/0056401 A1 können Geräte, die mit stromauf liegenden Ports gekoppelt sind, eine Enumeration einer USB Umschalteinrichtung gemäß der Gesamtzahl der stromab liegenden Ports an der USB Umschalteinrichtung durchführen. Wenn ein erster stromauf liegender Port mit einem ersten stromab liegenden Port kommuniziert, können Statusregister, die an den zweiten stromauf liegenden Port gekoppelt sind, dem zweiten S stromab liegenden Gerät anzeigen, dass der erste stromab liegende Port abgeschaltet ist. Durch die Enumeration der USB Umschalteinrichtung entsprechend der Gesamtzahl der stromab liegenden Ports, müssen die stromauf liegenden Geräte keine erneute Enumeration der Umschalteinrichtung jedes Mal dann ausführen, wenn das Stromabgabe Gerät umgeschaltet wird. Eine Umschalteinrichtung zur intelligenten Verknüpfung der Ports kann die Umschaltung von Kommunikationen für den stromab liegenden Port verzögern, wenn ein aktiver Transfer zwischen einem zugehörigen stromab liegenden Port und einem stromauf liegenden Port im Gange ist.

Der vorliegenden Erfindung liegt somit die Aufgabe zugrunde, die Umschaltung einzelner Geräte innerhalb eines USB-Multifunktionsgerätes schneller zu ermöglichen, um geringstmögliche Wartezeiten für das Durchführen des Umschaltvorganges zu erzielen.

Diese Aufgabe wird mit einer Kopplungseinrichtung gemäß Anspruch 1 bzw. einem Verfahren gemäß Anspruch 9 gelöst. In besonders vorteilhafter Weise ist diese Lösung bei einem Börsen-Tradingsystem-Endgerät gemäß Anspruch 6 einzusetzen. Vorteilhafte Weiterbildungen der Erfindung sind Gegenstand der abhängigen Ansprüche.

Eine erfindungsgemäße Kopplungseinrichtung zum dynamischen Belegen von USB-Endpunkten einer USB-Schnittstelle, auf die mindestens zwei verschiedene oder gleichartige Applikationen zugreifen können, weist eine USB-Schnittstelle auf, in der mindestens zwei Ports enthalten sind. Unter "Applikation" ist ein Computerprogramm bzw. eine Software zur Steuerung einer entsprechenden Anwendung wie beispielsweise eine Mithöreinrichtung oder eine Sprecheinrichtung zu verstehen, die einem Anwender eine Steuerung der Anwendung ermöglicht. Jedem der Ports ist mindestens ein USB-Endpunkt zugeordnet bzw. zugewiesen. Ferner weist die Kopplungseinrichtung eine Steuereinrichtung auf, mit der die USB-Endpunkte während des laufenden Betriebs der Kopplungseinrichtung dynamisch belegt bzw. umgeschaltet werden können. Je nach Konfiguration und Betriebsmodus des Geräts, dem die erfindungsgemäße Kopplungseinrichtung zugeordnet oder in das diese Kopplungseinrichtung eingebaut ist, ist eine Vielzahl von verschiedenen Konfigurationsmöglichkeiten gegeben, die auch als Gesamtheit der Betriebsmodi bezeichnet werden kann. Die Steuereinrichtung ist so ausgestaltet, dass sie alle USB-Endpunkte, die für die Gesamtheit der durch die Applikationen ausführbaren Betriebsmodi benötigt werden, durch Initialisierung vorkonfiguriert. Eine derartige Initialisierung wird auch als USB-Enumeration oder als Enumeration-Prozess bezeichnet. Diese Konfiguration aller für die Ausführung der verschiedensten Betriebsmodi möglicherweise erforderlichen USB-Endpunkte unterscheidet sich dabei von dem aus Windows bekannten Enumeration-Prozess, bei dem nur die für die derzeitige oder für die absehbare Konfiguration bzw. den entsprechenden Betriebsmodus erforderlichen USB-Endpunkte konfiguriert werden. Bei dem bisher bekannten Verfahren musste somit beim Übergang von einem Betriebsmodus zu einem anderen ein erneuter Enumeration-Prozess ausgeführt werden, um die Konfiguration der USB-Endpunkte an die neue Situation vornehmen zu können.

Erfindungsgemäß kann jedoch durch die Vorkonfiguration aller USB-Endpunkte erreicht werden, dass die Belegung der USB-Endpunkte nach dem Zugriff durch eine der Applikationen, die eine Änderung der Belegung der USB-Endpunkte erfordert bzw. erzwingt, die Belegung der USB-Endpunkte umgeschaltet werden kann, ohne die von der Umschaltung betroffenen USB-Endpunkte (oder auch andere USB-Endpunkte) deaktivieren zu müssen. Dadurch ist mit der erfindungsgemäßen Kopplungseinrichtung eine dynamische Belegung bzw. Umschaltung der USB-Endpunkte sehr viel schneller als beim Stand der Technik möglich und kann in der Regel sogar unterbrechungsfrei durchgeführt werden. Somit zeichnet sich die erfindungsgemäße Lösung dadurch aus, dass dank der Kopplungseinrichtung keine feste Zuordnung der Ein- und Ausgabegeräte zu den USB-Endpunkten beibehalten werden muss, sondern dass diese Zuordnung je nach gewünschter Anwendung während der Laufzeit der Steuersoftware dynamisch geändert bzw. konfiguriert werden kann.

Gemäß einer bevorzugten Ausführungsform der erfindungsgemäßen Kopplungseinrichtung ist mindestens einer der Ports bidirektional, d. h. diesem Port sind zwei USB-Endpunkte zugeordnet. Dadurch ist eine größere Flexibilität bei den jeweiligen Anwendungsmöglichkeiten gegeben.

In der Praxis dürfte es sinnvoll sein, dass die Steuereinrichtung so ausgestaltet ist, dass sie das Umschalten bzw. dynamische Belegen der USB-Endpunkte so ausführen kann, dass sie nicht erneut einen Enumeration-Prozess ausführen muss. Dies vereinfacht die Steuerung beim dynamischen Belegen bzw. Umschalten der USB-Endpunkte und beschleunigt diese Vorgänge.

Gemäß einer vorteilhaften Weiterbildung der Erfindung umfasst die Kopplungseinrichtung eine Audio-Einrichtung, der mindestens ein Lautsprecher - vorzugsweise zwei Lautsprecher oder mehr - sowie vorzugsweise ein Mikrofon - zugeordnet sind. Bei dieser Ausführungsform sind dank der erfindungsgemäßen Kopplungseinrichtung die Lautsprecher und das Mikrofon wahlweise ein- und ausschaltbar, ohne dass diese Vorrichtung jeweils gesondert aktiviert oder deaktiviert werden müssten.

Die Handhabung der erfindungsgemäßen Kopplungseinrichtung kann verbessert werden, wenn sie eine graphische Benutzeroberfläche - oft auch als Graphical User Interface oder kurz GUI bezeichnet - aufweist. Eine derartige Benutzeroberfläche wird auch als Meldungsschnittstelle oder USB-HID-Interface bezeichnet. Die Benutzeroberfläche kann für die Einstellung der Zuordnung der jeweiligen Geräte bzw. USB-Endpunkte verwendet werden. Dies bietet den Vorteil, dass keine proprietären Schnittstellen eingesetzt werden müssen, sondern Standard-USB-Anschlüsse bzw. Standard-USB-Endpunkte verwendet werden können.

Gegenstand der vorliegenden Erfindung ist ferner ein Börsen-Tradingsystem-Endgerät, bei dem die vorliegende Erfindung mit großem Vorteil eingesetzt werden kann. Ein derartiges Endgerät umfasst die vorgenannte Kopplungseinrichtung, welche drei Ports aufweist, von denen mindestens ein Port bidirektional ist, ein Mikrofon, das dem bidirektionalen Port zugeordnet ist, und zwei Lautsprecher, die den beiden anderen Ports zugeordnet sind. In dieser Konfiguration sind diese beiden anderen Ports, ohne dass die Ausführungsform hierauf beschränkt wäre, unidirektional. Ein Vorteil dieser Ausführungsform besteht darin, dass die Art der Benutzung der beiden Lautsprecher sowie gegebenenfalls des Mikrofons und darüber hinaus auch die Nutzung anderer Medienquellen mit großer Flexibilität und Geschwindigkeit - insbesondere beim Umschalten bzw. dynamischen Belegen der USB-Endpunkte - möglich ist. Ein derartiges Endgerät kann mit Vorteil derart weitergebildet werden, dass ihm mindestens zwei Mithöreinrichtungen und mindestens zwei Sprecheinrichtungen zugeordnet sind. Dadurch kann ein solches Endgerät in flexibelster Weise eingesetzt, benutzt und an die jeweiligen gewünschten Konfigurationen angepasst werden.

Eine vorteilhafte Ausgestaltung des erfindungsgemäßen Endgeräts besteht darin, dass jeweilige Applikationen für die Mithöreinrichtungen und die Sprecheinrichtungen vorgesehen sind, die einem eigenen Client zugeordnet sind.

Die der Erfindung zugrunde liegende Aufgabe wird außerdem gelöst mit einem Verfahren zum dynamischen Belegen von USB-Endpunkten einer USB-Schnittstelle, auf die durch mindestens zwei Applikationen zugegriffen werden kann, wobei das Verfahren folgende Schritte umfasst: Zunächst werden alle USB-Endpunkte, die für die mindestens zwei Applikationen (also für alle denkbaren Betriebsmodi) durch eine Anfangsinitialisierung vorkonfiguriert. Anschließend werden die USB-Endpunkte je nach Maßgabe des Zugriffs durch mindestens eine oder alle der Applikationen dynamisch belegt, was speziell durch Umschalten der Belegung erfolgt. Da sämtliche Konfigurationen bzw. Betriebsmodi bereits vorkonfiguriert sind, müssen die durch die Umschaltung bzw. die dynamische Belegung betroffenen USB-Endpunkte nicht erst deaktiviert werden, sondern können praktisch ohne Verzögerung nach einer Software-Umschaltung der USB-Endpunkte benutzt werden. Es ist bevorzugt, dass dieses dynamische Belegen bzw. Umschalten ohne erneutes Ausführen eines Enumeration-Prozesses durchgeführt werden kann.

Weitere Vorteile, Merkmale und Besonderheiten der vorliegenden Erfindung ergeben sich aus der nachfolgenden Beschreibung vorteilhafter Ausführungsformen der Erfindung unter Bezugnahme auf die Zeichnung. Hierbei wird die Erfindung anhand eines Börsen-Tradingsystem-Endgeräts, wie es beispielsweise unter der Bezeichnung "OSXpert Speaker Module" von Siemens bekannt ist, beschrieben. Es ist jedoch festzuhalten, dass die vorliegende Erfindung nicht auf ein Audiosystem beschränkt ist, sondern auch bei beliebigen anderen Systemen einsetzbar ist, wie beispielsweise solchen, die Bild- und/oder Videodaten verarbeiten.

Es zeigen schematisch:
FIG. 1 bis 7 verschiedene Betriebsmodi eines erfindungsgemäßen Börsen-Tradingsystem-Endgeräts, und
FIG. 8 eine schematische Darstellung eines solchen Endgeräts.

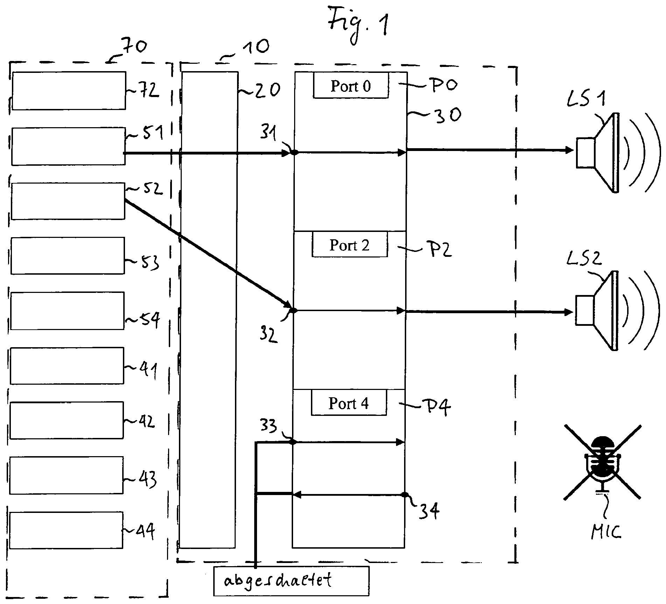

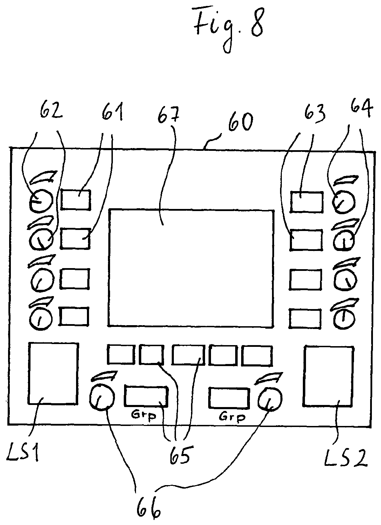

Zunächst wird anhand von FIG. 8 ein erfindungsgemäßes Börsen-Tradingsystem-Endgerät 60 erläutert, das auch kurz als Speaker-Modul bezeichnet wird. Ein derartiges Speaker-Modul 60 dient als sogenanntes Stimulus-Gerät und/oder als graphische Benutzeroberfläche, mit der beispielsweise die Lautstärke zur Wiedergabe von Tönen oder Mikrofonempfindlichkeiten eingestellt sowie die Auswahl von bestimmten Geräten oder Gerätegruppen vorgenommen werden kann. Hierzu ist eine Anzeigeeinrichtung 67 vorgesehen. Links und rechts unten weist das Speaker-Modul 60 jeweils einen Lautsprecher LS1 bzw. LS2 auf. Bei dem in FIG. 8 gezeigten Beispiel wirken die an der Unterseite des Geräts dargestellten Tasten bzw. Knöpfe 65 und Potentiometer 66 nur auf das Speaker-Modul 60 selbst, während die links dargestellten Tasten 61 und Potentiometer 62 sowie die rechts dargestellten Knöpfe 63 und Potentiometer 64 auf Applikationen wirken, die in einem sogenannten Turret 70 (vgl. FIG. 1) zusammengefasst sind, das einen eigenen Client darstellt und eine Logikvorrichtung ist. Der Turret ist beispielsweise ein OpenScape Xpert Client, der eine Telefonanlagen-Applikation darstellt, die z.B. auf einem eigenen PC oder einer gesonderten "Turret-Hardware" läuft, an dem bzw. an der das Speaker-Modul angeschlossen ist. Es ist auch möglich, die Speaker-Modul-Hardware und die Turret-Hardware in einem Gerät zu integrieren.

Die Knöpfe 61 und die Potentiometer 62 können einer Mithöreinrichtung 51 bis 54 (vergleiche FIG. 1) zugeordnet sein, während die Knöpfe 63 und die Potentiometer 64 einer Sprecheinrichtung 41 bis 44 (vergleiche ebenfalls FIG. 1) zugeordnet sein können. An das Speaker-Modul 60 kann ein Mikrofon angeschlossen werden, das zu einer Sprecheinrichtung gehört, aber hier jedoch nicht dargestellt ist.

FIG. 1 zeigt schematisch eine erfindungsgemäße Kopplungseinrichtung 10, der in diesem Beispiel ein links dargestellter Turret 70 zugeordnet ist und an die rechts dargestellte Lautsprecher LS1 und LS2 sowie ein Mikrofon MIC anschließbar sind. Die Kopplungseinrichtung 10 enthält eine USB-Schnittstelle 30 mit drei Ports P0, P2 und P4. Die Ports P0 und P2 sind in diesem Beispiel unidirektional, während Port P4 bidirektional ist. Den (unidirektionalen) Ports P0 und P2 ist jeweils ein USB-Endpunkt 31 bzw. 32 zugeordnet, während dem (bidirektionalen) Port P4 zwei USB-Endpunkte 33 und 34 zugeordnet sind. Die Kopplungseinrichtung 10 weist ferner eine nur schematisch dargestellte Steuereinrichtung 20 auf, welche die USB-Endpunkte 31 bis 34 dynamisch belegen bzw. umschalten kann, was später noch im Einzelnen erläutert wird. Die Lautsprecher LS1 und LS2 sowie das Mikrofon MIC sind in herkömmlicher Weise an die Kopplungseinrichtung 10 angeschlossen. Die Kopplungseinrichtung 10 ihrerseits kann mittels eines USB-Anschlusses - oder auch mittels zweier USB-Anschlüsse, falls beispielsweise ein höherer Stromfluss erforderlich ist - angeschlossen werden. In dem Turret 70 sind vier Mithöreinrichtungen 51 bis 54 sowie vier Sprecheinrichtungen 41 bis 44 vorgesehen. Diese Einrichtungen sind keine Geräte, sondern entsprechende Applikationen bzw. Treiber für diese Geräte, die auf die Kopplungseinrichtung 10 zugreifen können. In dem Turret 70 kann beispielsweise außerdem eine Applikation 72 (ganz oben dargestellt) für einen externen Lautsprecher vorhanden sein. Das Speaker-Modul 60 meldet sich beim Turret 70 als Multifunktionsgerät ("Composite Device") mit drei separaten Einrichtungen an, nämlich zwei Lautsprechern und einem Mikrofon.

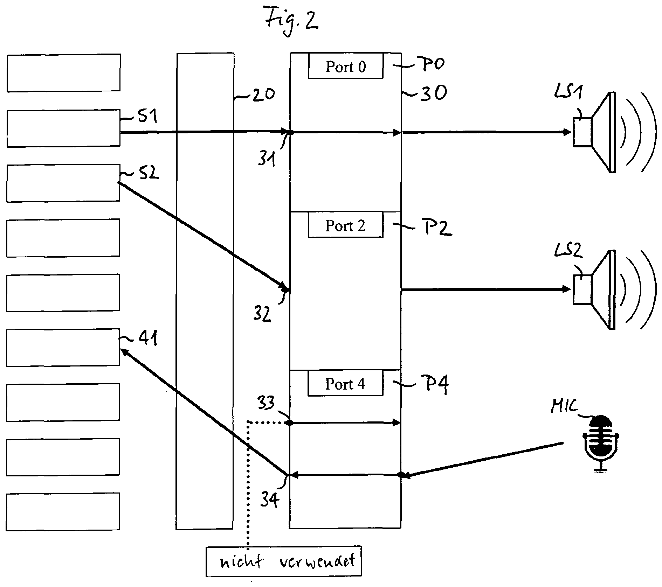

In FIG. 1 ist ein Betriebsmodus 1 abgebildet, bei dem eine erste Mithöreinrichtung 51 auf den USB-Endpunkt 31 im Port P0 zugreift und den ersten Lautsprecher LS1 ansteuert, während eine zweite Mithöreinrichtung 52 den USB-Endpunkt 32 im Port P2 ansteuert und Signale für den Lautsprecher LS2 liefert. Somit implementiert das Speaker-Modul 60 gemäß dem gezeigten Beispiel zwei Mithöreinrichtungen 51 und 52. Die USB-Endpunkte 33 und 34 sind abgeschaltet ("disabled"). Es ist darauf hinzuweisen, dass beispielsweise über die Mithöreinrichtung 51 vier verschiedene Gespräche an den Lautsprecher LS1 übermittelt werden können, die zuvor über einen sogenannten Medialink-Server gemischt worden waren. In einem solchen Medialink-Server können jeweils nur maximal vier Gespräche zu einem sogenannten Stream zusammengemischt werden. Unter Verwendung der beiden weiteren Mithöreinrichtungen 53 und 54 können mit weiteren, hier nicht dargestellten, Geräten bis zu zwei mal vier verschiedene Gespräche mitgehört werden. Greift nun beispielsweise eine Sprecheinrichtung 41 auf die Kopplungseinrichtung 10 zu, damit diese einen Eingang vom Mikrofon MIC empfangen kann, wird der Port P4 geöffnet ("enabled"), und die Signale vom Mikrofon MIC können über den USB-Endpunkt 34 im Port P4 an die Sprecheinrichtung 41 gelangen. Der USB-Endpunkt 33 wird hierbei nicht verwendet. Die FIG. 2 stellt diesen Betriebsmodus 2 dar. Hierbei ist es außerdem möglich, dass die Tatsache, dass das Mikrofon aktiviert ist, auf dem Speaker-Modul 60 optisch dargestellt ist. Wie ersichtlich, sind auch im Betriebsmodus 2 zwei Mithöreinrichtungen 51 und 52 (zusätzlich zur Sprecheinrichtung 41) implementiert.

Die im Hinblick auf die Betriebsmodi 1 und 2 erfolgten Erläuterungen und verwendeten Bezugszeichen gelten auch für die nachfolgend beschriebenen Betriebsmodi, sofern nichts anderes angegeben ist oder es sich aus technischen Gründen von selbst verbietet.

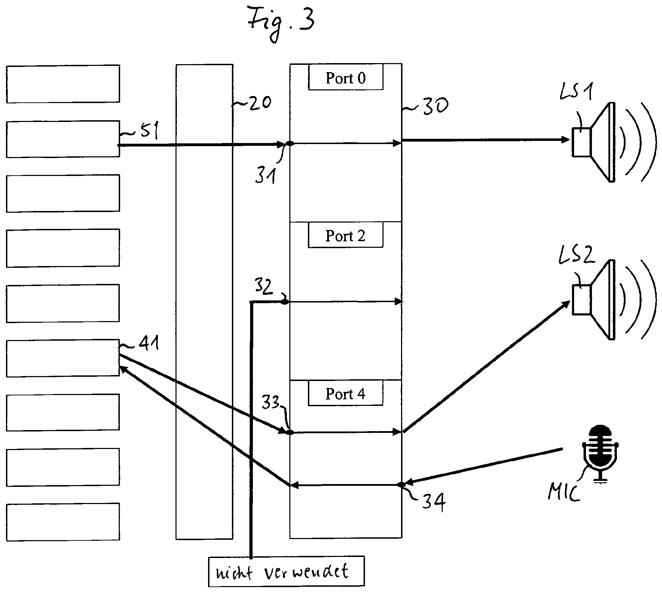

In FIG. 3 ist ein Betriebsmodus 3 dargestellt, bei dem nur eine Mithöreinrichtung 51 und eine Sprecheinrichtung 41 implementiert sind, bei dem der "übriggebliebene" Lautsprecherkanal in Kombination mit dem Mikrofon MIC für eine nachstehend beschriebene Freisprecheinrichtung verwendet wird. Während die Mithöreinrichtung 51 wie bei den vorherigen beiden Betriebsmodi an den Lautsprecher LS1 sendet, kann somit die Sprecheinrichtung 41 über den USB-Endpunkt 33 im Port P4 an den Lautsprecher LS2 senden und vom Mikrofon MIC Signale über den USB-Endpunkt 34 im Port P4 empfangen.

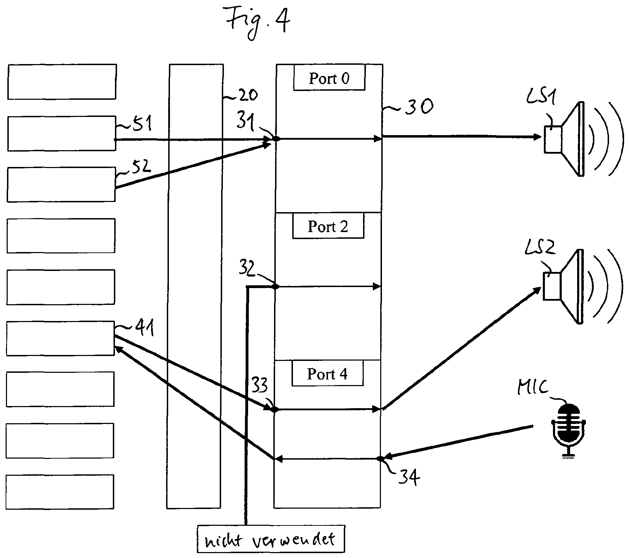

Ein Betriebsmodus 4 ist in FIG. 4 dargestellt und unterscheidet sich von Betriebsmodus 3 insofern, als zwei Mithörkanäle im Turret (oder bereits zuvor) in den Mithöreinrichtungen 51 und 52 zusammengemischt werden und über den USB-Endpunkt 31 im Port P0 auf den Lautsprecher LS1 gegeben werden.

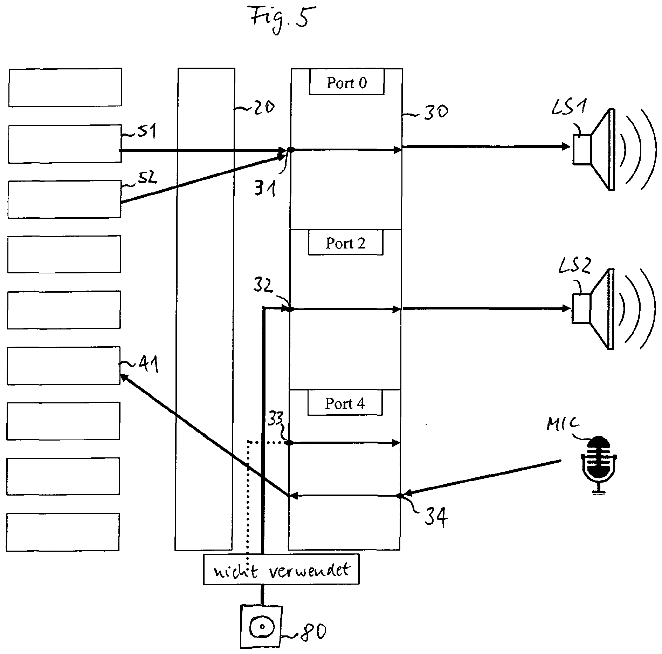

Bei dem in FIG. 5 dargestellten Betriebsmodus 5 sind zwei Mithöreinrichtungen 51 und 52 implementiert, die bis zu 2 (Streams) x 4 (bereits gemischte Gespräche) = 8 Gespräche zu einem einzigen Stream zusammenmischen und über den USB-Endpunkt 31 auf den Lautsprecher LS1 geben können. Ein Mikrofon MIC ist über den USB-Endpunkt 34 an die Sprecheinrichtung 41 angeschlossen. Der Lautsprecher LS2 erhält bei diesem Betriebsmodus 5 - anders als bei den vorherstehend beschriebenen Betriebsmodi - keine Signale von den Mithöreinrichtungen oder Sprecheinrichtungen, sondern von einem sogenannten Media Player 80, und zwar über den USB-Endpunkt 32 im Port P2. Ein derartiger Media Player 80 kann beispielsweise ein CD-Spieler, ein Rundfunkgerät zur Übertragung von beispielsweise Börsennachrichten oder ein Infokanal von einer anderen Börse sein. Durch die Möglichkeit der Einbindung eines derartigen Media Players 80, d. h. die Übertragung von entsprechenden "externen" Informationen, wird die Flexibilität eines solchen Speaker-Moduls 60 beträchtlich erhöht. Wie aus der vorstehenden Beschreibung ersichtlich, wird der Lautsprecher LS2 nicht für das Handeln bzw. Trading verwendet, sondern für den Media Player 80, und das Mikrofon wird nicht im Sinne einer "normalen" Sprecheinrichtung verwendet, bei der üblicherweise ein Lautsprecher zum Mithören der Antwort auf das Sprechen eingesetzt wird, sondern beispielsweise zum Durchführen von Durchsagen, bei der keine akustische Rückmeldung erfolgt.

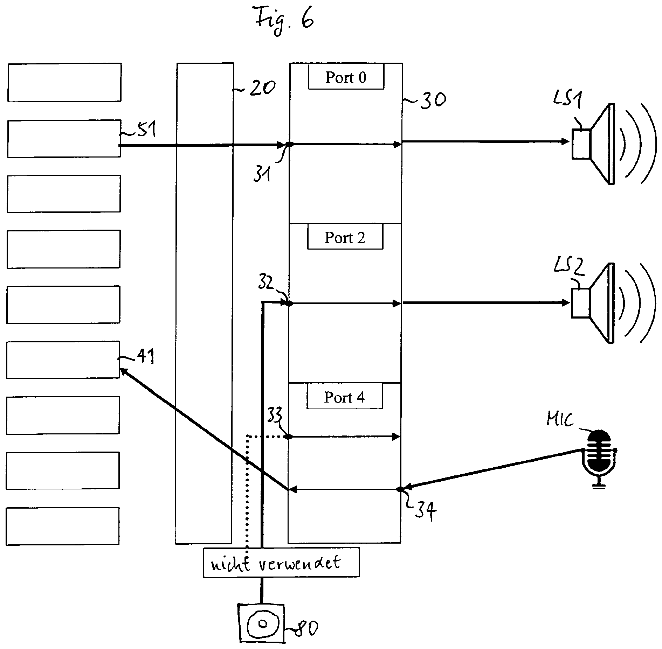

In FIG. 6 ist ein Betriebsmodus 6 dargestellt, der sich vom Betriebsmodus 5 dadurch unterscheidet, dass der Lautsprecher LS1 nur von der Mithöreinrichtung 51 Signale empfängt und keine von zwei Mithöreinrichtungen 51 und 52 zusammengemischten Gespräche.

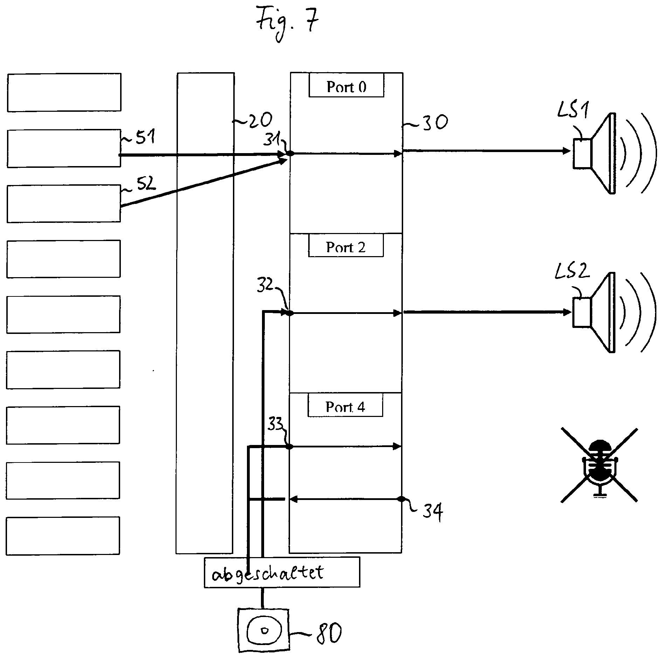

In FIG. 7 schließlich ist ein Betriebsmodus 7 dargestellt, bei dem zwei Mithöreinrichtungen 51 und 52 implementiert sind, ohne dass ein Mikrofon MIC angeschlossen wäre. Wie bei den beiden vorhergehenden Betriebsmodi 5 und 6 wird der Lautsprecher LS2 über den USB-Endpunkt 32 im Port P2 vom Media Player 80 beliefert bzw. angesteuert. Der Port P4 mit den beiden USB-Endpunkten 33 und 34 ist bei diesem Betriebsmodus gesperrt bzw. abgeschaltet. Die Audiosignale der Mithöreinrichtungen 51 und 52 gelangen nach Mischung über den USB-Endpunkt 31 im Port P0 an den Lautsprecher LS1 zur Ausgabe.

Es bleibt festzuhalten, dass der Übergang von einem Betriebsmodus zu einem anderen Betriebsmodus jeweils durch logische Umschaltung bzw. dynamische Belegung der entsprechenden USB-Endpunkte 31 bis 34 erfolgt, ohne dass eine Deaktivierung von Geräten bzw. Applikationen und anschließende Aktivierung anderer Geräte bzw. Applikationen erfolgen muss, was einen entsprechenden Zeitverlust bzw. eine entsprechende Verzögerung bedeuten würde. Die Umschaltung kann somit praktisch verzögerungsfrei erfolgen. Die USB-Endpunkte 31 bis 34 sind dabei nur logische Endpunkte, jedoch keine physikalischen Endpunkte. Physikalisch ist nur ein USB-Anschluss vorhanden, dem jeweilige Ports - also logische Einheiten - zugeordnet sind.

Am Beispiel des Betriebsmodus 2 sei nachfolgend exemplarisch kurz erläutert, welche weiteren elektronischen Komponenten in der Kopplungseinrichtung 10 benutzt werden, ohne dass sie bisher ausdrücklich beschrieben worden wären. Aus der Mithöreinrichtung 51 und der Mithöreinrichtung 52 gelangen Daten über die Ports P0 und P2 an ein sogenanntes IOM-2-Interface, welches häufig zum Verbinden von Signalpfaden zwischen verschiedenen SOCs (System-On-Chip) verwendet wird. Es ist klar, dass stattdessen auch andere Interfaces bzw. Schnittstellen verwendet werden können. Ein digitaler Signalprozessor (oft DSP abgekürzt) holt diese Daten ab, führt dann die sogenannte Echo-Cancellation (also die Beseitigung unerwünschter Rückkopplungen) durch, bearbeitet die Daten in geeigneter Weise und gibt sie dann zur Ausgabe an die Lautsprecher LS1 und LS2, die bekanntlich analoge Vorrichtungen sind. In ähnlicher Weise werden vom (ebenfalls analogen) Mikrofon MIC aufgenommene Daten an den digitalen Signalprozessor geliefert, der diese aufbereitet, beispielsweise verstärkt und filtert, und dann über das IOM-2-Interface über den Port P4 an den Turret 70 liefert, in dem eine entsprechende Applikation die Daten empfängt und in geeigneter Weise weiter verwendet.

In den vorigen Beispielen wurde die Kopplungseinrichtung 10 mit drei Ports P0, P2 und P4 mit USB-Endpunkten 31 bis 34 beschrieben. Es ist selbstverständlich, dass die vorliegende Erfindung nicht hierauf beschränkt ist, sondern wesentlich mehr als die bezeichneten Ports und Endpunkte enthalten kann. Das Grundprinzip der vorliegenden Erfindung, nämlich die Vorkonfigurierung mittels anfänglicher Initialisierung aller für die späteren Konfigurationen bzw. Betriebsmodi erforderlichen Endpunkte, bleibt in jedem Fall gleich. Dadurch kann von einem Betriebsmodus in einen anderen Betriebsmodus einfach und unkompliziert gewechselt werden, ohne dass Geräte bzw. Applikationen deaktiviert und dann andere wieder aktiviert werden müssen und ohne einen Enumeration-Prozess erneut ausführen zu müssen.

Es ist festzuhalten, dass die unter Bezug auf die dargestellten Ausführungsformen beschriebenen Merkmale der Erfindung, wie beispielsweise die Art, Ausgestaltung und Anordnung der Schnittstellen, Ports und Endpunkte sowie der einzelnen Komponenten wie Mikrofon und Lautsprecher, Turret und Kopplungseinrichtung, auch bei anderen Ausführungsformen vorhanden sein können, außer wenn es anders angegeben ist oder sich aus technischen Gründen von selbst verbietet.

### Bezugszeichenliste

- 10: Kopplungseinrichtung
- 20: Steuereinrichtung
- 30: USB-Schnittstelle
- 31-34: USB-Endpunkt
- 41-44: Sprecheinrichtung
- 51-54: Mithöreinrichtung
- 60: Börsen-Tradingsystem-Endgerät/Speaker-Modul
- 61,63,65: Knopf
- 62,64,66: Potentiometer
- 67: GUI/Anzeigeeinrichtung
- 70: Client/Turret
- 72: Applikation für externen Lautsprecher
- 80: Media Player
- LS1, LS2: Lautsprecher
- MIC: Mikrofon
- P0-P4: Port

## Patentansprüche

1. Kopplungseinrichtung (10) zum dynamischen Belegen von logischen USB-Endpunkten (31, 32, 33, 34) einer USB-Schnittstelle (30), auf die durch mindestens zwei Applikationen zugegriffen werden kann, die eine Vielzahl von Betriebsmodi ausführen können, umfassend:
- eine USB-Schnittstelle (30), die mindestens zwei Ports (P0, P2, P4) aufweist, die jeweils mindestens einen logischen USB-Endpunkt (31, 32, 33, 34) umfassen, und
- eine Steuereinrichtung (20) zum dynamischen Belegen der logischen USB-Endpunkte (31, 32, 33, 34) mit den mindestens zwei Applikationen, entsprechend ihren Betriebsmodi, worin die Steuereinrichtung (20) so ausgestaltet ist, dass mittels anfänglicher Initialisierung alle logischen USB-Endpunkte (31, 32, 33, 34), die für die Gesamtheit der späteren, durch die mindestens zwei Applikationen ausführbaren Betriebsmodi benötigt werden, vorkonfiguriert werden, wodurch die Belegung der logischen USB-Endpunkte (31, 32, 33, 34) während des laufenden Betriebs der Kopplungseinrichtung (10) nach Maßgabe des Zugriffs durch mindestens eine der Applikationen logisch umgeschaltet wird, ohne die von der Umschaltung betroffenen logischen USB-Endpunkte (31, 32, 33, 34) deaktivieren zu müssen.

2. Kopplungseinrichtung (10) nach Anspruch 1,
**dadurch gekennzeichnet, dass** mindestens einer der Ports (P4) bidirektional ist.

3. Kopplungseinrichtung (10) nach Anspruch 1 oder 2,
**dadurch gekennzeichnet, dass** die Steuereinrichtung (20) so ausgestaltet ist, dass sie das dynamische Umschalten ausführen kann, ohne erneut einen Enumeration-Prozess ausführen zu müssen.

4. Kopplungseinrichtung (10) nach einem der vorhergehenden Ansprüche, **dadurch gekennzeichnet, dass** sie eine Audio-Einrichtung umfasst, der mindestens ein Lautsprecher (LS1, LS2), und vorzugsweise ein Mikrofon (MIC), zugeordnet ist.

5. Kopplungseinrichtung (10) nach einem der vorhergehenden Ansprüche, **dadurch gekennzeichnet, dass** sie eine grafische Benutzeroberfläche (50) aufweist.

6. Börsen-Tradingsystem-Endgerät (60), umfassend:
- eine Kopplungseinrichtung (10) gemäß einem der vorhergehenden Ansprüche mit drei Ports (P0, P2, P4), von denen mindestens ein Port (P4) bidirektional ist,
- ein Mikrofon (MIC), das dem bidirektionalen Port (P4) zugeordnet ist, und
- zwei Lautsprecher (LS1, LS2), die den beiden anderen Ports (P0, P2) zugeordnet sind.

7. Börsen-Tradingsystem-Endgerät nach Anspruch 6,
**dadurch gekennzeichnet, dass** ihm mindestens zwei Mithöreinrichtungen (51-54) und mindestens zwei Sprecheinrichtungen (41-44) zugeordnet sind.

8. Börsen-Tradingsystem-Endgerät nach Anspruch 7,
**dadurch gekennzeichnet, dass** es Applikationen für die Mithöreinrichtungen (51-54) und die Sprecheinrichtungen (41-44) umfasst, die einem eigenen Client (70) zugeordnet sind.

9. Verfahren zum dynamischen Belegen von logischen USB-Endpunkten (31, 32, 33, 34) einer USB-Schnittstelle (30), auf die durch mindestens zwei Applikationen zugegriffen werden kann, die eine Vielzahl von Betriebsmodi ausführen können, umfassend folgende in einer Kopplungseinrichtung (10) ausgeführten Schritte:
- mittels anfänglicher Initialisierung Vorkonfigurieren aller logischen USB-Endpunkte (31, 32, 33, 34), die für die Gesamtheit der späteren, durch die mindestens zwei Applikationen ausführbaren Betriebsmodi benötigt werden, und
- dynamisches Belegen mit den mindestens zwei Applikationen, entsprechend ihren Betriebsmodi, insbesondere durch Umschalten, der logischen USB-Endpunkte (31, 32, 33, 34) während des laufenden Betriebs der Kopplungseinrichtung (10) nach Maßgabe des Zugriffs durch mindestens eine der Applikationen ohne Deaktivierung der von der Umschaltung betroffenen logischen USB-Endpunkte (31, 32, 33, 34).

10. Verfahren nach Anspruch 9,
**dadurch gekennzeichnet, dass** das dynamische Belegen ohne erneutes Ausführen eines Enumeration-Prozesses ausgeführt wird.

## Claims

1. Coupling device (10) for dynamically allocating USB endpoints (31, 32, 33, 34) of a USB-interface (30) which can be accessed by at least two applications, which can execute a plurality of operating modes, comprising:
- a USB interface (30) exhibiting at least two ports (P0, P2, P4), which respectively comprise at least one logical USB endpoint (31, 32, 33, 34), and
- a control device (20) for dynamically allocating the logical USB endpoints (31, 32, 33, 34) with the at least two applications, pursuant to its operating modes,
wherein the control device (20) is designed in such a way that by means of initial initialization, all logical USB endpoints (31, 32, 33, 34), which are required for the totality of the later operating modes that are executable by the at least two applications, are pre-configured, whereby the allocation of the logical USB endpoints (31, 32, 33, 34) are logically switched by at least one of the applications during the ongoing operation of the coupling device (10) according to the access, without needing to deactivate the logical USB endpoints (31, 32, 33, 34) affected by the switching.

2. Coupling device (10) according to Claim 1,
**characterized by** the fact that at least one of the ports (P4) is bidirectional.

3. Coupling device (10) according to Claim 1 or 2,
**characterized by** the fact that the control unit (20) is switched off in such a manner that it can execute the dynamic switching without needing to once again execute the enumeration process.

4. Coupling device (10) according to one of the preceding Claims,
**characterized by** the fact that it comprises an audio device that is associated with at least one loudspeaker (LS1, LS2), and preferably one microphone (MIC).

5. Coupling device (10) according to one of the preceding Claims,
**characterized by** the fact that it exhibits a graphic user interface (50).

6. Stock market trading system terminal (60), comprising:
- a coupling device (10) according to one of the preceding Claims with three ports (P0, P2, P4), of which at least one (P4) is bidirectional,
- one microphone (MIC), that is associated with the bidirectional port (P4), and
- two loudspeakers (LS1, LS2), which are associated with the other two ports (P0, P2).

7. Exchange trading system terminal according to Claim 6,
**characterized by** the fact that it is always associated with at least two audio monitors (51-54) and at least two speech devices (41-44).

8. Exchange trading system terminal according to Claim 7,
**characterized by** the fact that it comprises applications for the audio monitors (51-54) and the speech devices (41-44), which are associated with their own client (70).

9. Method for dynamically allocating logical USB endpoints (31, 32, 33, 34) of a USB interface (30), that can be accessed by at least two applications, which can execute a plurality of operating modes, comprising the following steps executed in a coupling device (10):
- pre-configuration, by means of an initial initialization, of all logical USB endpoints (31, 32, 33, 34) that are required by the operating modes executable by the at least two applications, and,
- dynamic allocation with the at least two applications, corresponding to their operating modes, in particular by means of switching, of the logical USB endpoints (31, 32, 33, 34) during the ongoing operation of the coupling device (10) according to the access by at least one of the applications without deactivation of the logical USB endpoints (31, 32, 33, 34) affected by the switching.

10. Method according to Claim 9,
**characterized by** the fact that the dynamic allocation is executed without a renewed execution of an enumeration process.

## Revendications

1. Dispositif de couplage (10) pour l'occupation dynamique de points de connexion USB logiques (31, 32, 33, 34) d'une interface USB (30), à laquelle il est possible d'accéder par le biais d'au moins deux applications qui peuvent exécuter une pluralité de modes de fonctionnement, comportant :
- une interface USB (30), qui comprend au moins deux ports (P0, P2, P4) qui comportent chacun au moins un point de connexion UBS logique (31, 32, 33, 34), et
- un appareil de commande (20) pour l'occupation dynamique des points de connexion UBS logiques (31, 32, 33, 34) avec les au moins deux applications, en correspondance avec leurs modes de fonctionnement,
dans lequel, l'appareil de commande (20) est conçu de sorte qu'au moyen d'une initialisation initiale sont préconfigurés tous les points de connexion UBS logiques (31, 32, 33, 34) qui sont nécessaires pour l'intégralité des futurs modes de fonctionnement exécutables par les au moins deux applications, moyennant quoi l'occupation des points de connexion UBS logiques (31, 32, 33, 34) pendant le fonctionnement en cours du dispositif de couplage (10) est commutée logiquement conformément à l'accès par le biais d'au moins une des applications sans devoir désactiver les points de connexion UBS logiques (31, 32, 33, 34) concernés par la commutation.

2. Dispositif de couplage (10) selon la revendication 1, **caractérisé en ce qu'**au moins un des ports (P4) est bidirectionnel.

3. Dispositif de couplage (10) selon la revendication 1 ou 2, **caractérisé en ce que** l'appareil de commande (20) est conçu de sorte qu'il peut exécuter la commutation dynamique sans devoir de nouveau exécuter un processus d'énumération.

4. Dispositif de couplage (10) selon l'une quelconque des revendications précédentes, **caractérisé en ce qu'**il comporte un appareil audio auquel est associé au moins un haut-parleur (LS1, LS2) et de préférence un microphone (MIC).

5. Dispositif de couplage (10) selon l'une quelconque des revendications précédentes,
**caractérisé en ce qu'**il comporte une interface utilisateur graphique (50)

6. Terminal de systèmes de négociations boursières (60), comportant :
- un dispositif de couplage (10) selon l'une quelconque des revendications précédentes avec trois ports (P0, P2, P4) dont au moins un port (P4) est bidirectionnel,
- un microphone (MIC) qui est associé au port bidirectionnel (P4), et
- deux haut-parleurs (LS1, LS2) qui sont associés aux deux autres ports (P0, P2).

7. Terminal de systèmes de négociations boursières selon la revendication 6,
**caractérisé en ce qu'**au moins deux appareils d'écoute (51-54) et au moins deux appareils d'entrée vocale (41-44) sont associés au terminal.

8. Terminal de systèmes de négociations boursières selon la revendication 7,
**caractérisé en ce qu'**il comporte des applications pour les appareils d'écoute (51-54) et les appareils d'entrée vocale (41-44) qui sont associés à un client particulier (70).

9. Procédé d'occupation dynamique de points de connexion USB logiques (31, 32, 33, 34) d'une interface USB (30) à laquelle il est possible d'accéder par le biais d'au moins deux applications qui peuvent exécuter une pluralité de modes de fonctionnement, comportant les étapes suivantes exécutées dans un dispositif de couplage (10) :
- la préconfiguration au moyen d'une initialisation initiale de tous les points de connexion UBS logiques (31, 32, 33, 34) qui sont nécessaires pour l'intégralité des futurs modes de fonctionnement exécutables par les au moins deux applications, et
- l'occupation dynamique avec les au moins deux applications, en correspondance avec leurs modes de fonctionnement, en particulier par commutation, des points de connexion UBS logiques (31, 32, 33, 34) pendant le fonctionnement en cours du dispositif de couplage (10) conformément à l'accès par le biais d'au moins une des applications sans la désactivation des points de connexion UBS logiques (31, 32, 33, 34) concernés par la commutation.

10. Procédé selon la revendication 9,
**caractérisé en ce que** l'occupation dynamique est exécutée sans nouvelle exécution d'un processus d'énumération.
